**Europäisches Patentamt**

**European Patent Office**

**Office européen des brevets**

(19)

(11) Veröffentlichungsnummer: **0 001 080**
**B1**

(12) **EUROPÄISCHE PATENTSCHRIFT**

(45) Veröffentlichungstag der Patentschrift: **27.04.83**

(21) Anmeldenummer: **78100763.8**

(22) Anmeldetag: **28.08.78**

(51) Int. Cl.³: **F 16 L 37/28**

(54) **Unter Druck kuppelbare Verbindungskupplung.**

(30) Priorität: **12.09.77 DE 2741027**

(43) Veröffentlichungstag der Anmeldung:
**21.03.79 Patentblatt 79/6**

(45) Bekanntmachung des Hinweises auf die Patenterteilung:
**27.04.83 Patentblatt 83/17**

(84) Benannte Vertragsstaaten:
**BE CH FR GB LU NL SE**

(56) Entgegenhaltungen:
**CH - A - 491 316**
**DE - A - 2 520 393**
**DE A - 2 642 724**
**FR - A - 1 248 322**
**US - A - 3 236 251**
**US - A - 4 036 258**

(73) Patentinhaber: **DEUTSCHE SEMPERIT Gesellschaft m.b.H.**
**Triebstrasse 39**
**D-8000 München 50 (DE).**

(72) Erfinder: **Fischer, Wolf E.**
**Dieselstrasse 4**
**D-7505 Ettlingen (DE)**

Courier Press, Leamington Spa, England.

## Unter Druck kuppelbare Verbindungskupplung

Die Erfindung betrifft eine unter Druck kuppelbare Verbindungskupplung für Hydraulikleitungen mit dem Gehäuse einer zeitweise nicht druckbelasteten und dem Gehäuse einer im Betrieb ständig unter Druck stehenden Kupplungshälfte, wobei zentrisch in jedem Gehäuse eine Ventilführung angebracht ist in der je ein federbelastetes, hydraulisch beaufschlagbares Ventil axial verschiebbar angeordnet ist derart, daß die Ventilköpfe beim Kupplungsvorgang aufeinandergedrückt werden und hierbei das nicht durckbeaufschlagte Ventil um den doppelten möglichen Ventilhub des druckbeaufschlagten Ventils verschoben wird, und daß das nicht druckbeaufschlagte Ventil mit einer gegenüber dem druckbeaufschlagten Ventil stärkeren Feder belastet ist, so daß beim Druckausgleich das ständig druckbeaufschlagte Ventil in die Offenstellung gegen einen in der ständig druckbeaufschlagten Kupplungshälfte vorgesehenen Anschlag gedrückt wird wobei sich ein maximaler Ventil-Durchgangsquerschnitt bei beiden Ventilen ergibt.

Verbindungskupplungen dieser Art arbeiten im Normalbetrieb, also bei stets in gleicher Richtung von der zeitweise nicht druckbelasteten zur druckbelasteten Kupplungshälfte strömenden Hydraulikflüssigkeit vollkommen zufriedenstellend. Schon dann jedoch, wenn starke Druckschwankungen und Druckstöße auftreten, die eine Umkehrung der Strömungsrichtung hervorrufen können, kann das ständig unter Druck stehende Ventil zuschlagen, da das gegenüberliegende Ventil in seiner Lage nicht fixiert ist. Regelmäßig sind derartige Verbindungskupplungen dann nicht zu gebrauchen, wenn sich die Strömungsrichtung der Hydraulikflüssigkeit betriebsmäßig, unter Umständen sogar noch schlagartig, umkehrt und damit auch das Ventil zugeschlagen wird. Dies ist beispielsweise dann der Fall, wenn doppelt wirkende Zylinder in hydraulischen Anlagen vorgesehen sind, bei denen Druckleitung und Rücklaufleitung identisch sind. Eine Verstärkung des normalerweise in derartigen Hydraulikanlagen herrschenden Druckes kann zudem noch dadurch hervorgerufen werden, daß das Gewicht eines verbraucherseitigen Gerätes auf dem entsprechenden Kolben lastet, wie dies beispielsweise beim Absenken eines vollbelasteten Frontladers der Fall ist.

Zum Stand der Technik gehört eine Verbindungskupplung, bei der der freie Weg des zeitweise nicht druckbeaufschlagten Ventils nach dem Kuppeln eingeschränkt werden kann, so daß ein Zurückweichen der Ventile nicht mehr möglich ist. Diese Anpassung der Kupplung wird jedoch als recht nachteilig empfunden, da sie zum einen nur mit Werkzeug auszuführen ist und daher öfters nicht vorgenommen wird, oder weil sie, da sich der beschriebene Nachteil erst im Betrieb bemerkbar macht, vergessen wird.

Aufgabe der Erfindung ist es, eine Verbindungskupplung der beschriebenen Art so auszubilden, daß ein unbeabsichtigtes Zuschlagen des ständig unter Druch stehenden Ventils auch bei schlagartigen Änderungen der Strömungsrichtung der Hydraulikflüssigkeit wie auch bei starken und abrupten Druckschwankungen im Hydrauliksystem mit Sicherheit, auch ohne nachträgliche Anpassung der Kupplung, vermieden wird. Erreicht wird dies nach der Erfindung dadurch, daß der Durchmesser der Ausdrehung des Innenraumes des Gehäuses der zeitweise nicht druckbeaufschlagten Kupplungshälfte und damit der freie Druchgangsquerschnitt um die Ventilführung bzw. den Ventilschaft dentlich größer ist als derjenige in der ständig druckbeaufschlagten Kupplungshälfte.

Bei einer derartigen Ausbildung der Verbindungskupplung werden bei der Normal-Strömungsrichtung der Hydraulikflüssigkeit von der zeitweise nicht unter Druck stehenden Kupplungshälfte zu der ständig unter Druck stehenden Kupplungshälfte die Ventile einmal durch den stärkeren Federdruck des Ventils in der zeitweise nicht druckbeaufschlagten Kupplungshälfte, zum anderen aber auch durch hydraulische Kräfte auf den Anschlag in der ständig druckbeaufschlagten Kupplungshälfte gedrückt und damit inbekannter Weise einwandfrie offen gehalten. Diese Offenhaltung der Ventile stellt sich durch die erfindungsgemässe Ausbildung aber auch bei einer Umkehr der Strömungsrichtung ein, da sich nach den Strömungsgesetzen in dem deutlich größeren Durchgangsquerschnitt um die Ventilführung bzw. den Ventilschaft der zeitweise nicht unter Druck stehenden Kupplungshälfte, der sich durch die größere Ausdrehung beziehungsweise durch den größeren Innenraum ergibt, relativ zu dem engen Ventildurchgangsquerschnitt ein solch hoher Druck aufbaut, daß zusammen mit der das Ventil in der zeitweise nicht druckbeaufschlagten Kupplungshälfte belasteten starken Feder mit Sicherheit ein Zuschlagen des Ventils in der ständig druckbeaufschlagten Kupplungshälfte Verhindert wird. Diese Wirkung kann noch dadurch unterstützt werden, daß der Ventil-Durchgangsquerschnitt über beide Ventilköpfe hinweg gleichbleibend ist, so daß über diese Wegstrecke keine Druckänderung stattfindet.

Vorteilhaft ist schließlich auch noch, daß der Durchmesser der Ausdrehung des Innenraumes bis zum in Arbeitslage befindlichen Ventilkopf gleichbleibt und dort sprunghaft übergeht in den deutlich kleineren Aussendurchmesser des Ventil-Durchgangsquerschnittes. Durch diese Maßnahme stellt sich nicht nur der gewünschte Effekt des Druckaufbaues eindeutig ein, sondern es wird auch der Durchgangswiderstand der Verbindungskupplung verkleinert.

Auf der Zeichnung sind Ausführungsbeispiele des Erfindungsgegenstandes schematisch dargestellt und zwar zeigen:

Fig. 1 die Verbindungskupplung vor dem Kuppelvorgang,

Fig. 2 die gekuppelte Verbindungskupplung nach erfolgtem Druckausgleich,

Fig. 4 eine Ventilausführung mit Ringkolben und.

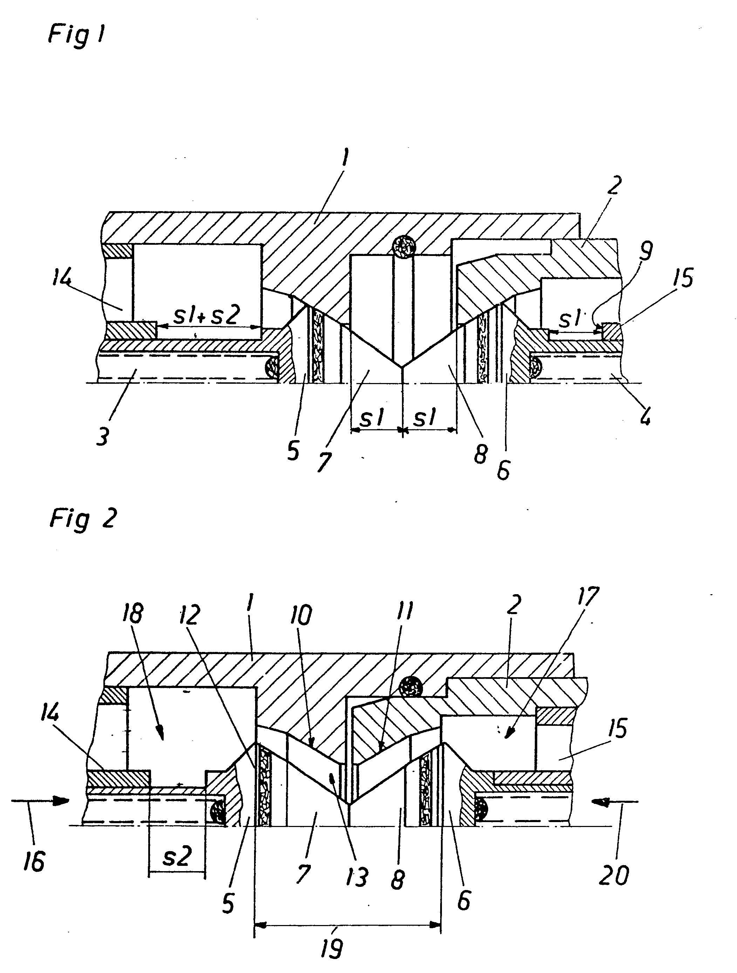

Im Gehäuse 1 einer zeitweise nicht druckbeaufschlagten Kupplungsmuffe wie auch im Gehäuse 2 eines im Betrieb ständig druckbeaufschlagten Kupplungssteckers sind Ventilführungen 14, 15, vorgesehen in denen Ventile 5, 6 axial verschiebbar angeordnet sind. Die Ventile 5, 6 werden durch Federn 3, 4 auf ihren zugehörigen Ventilsitz aufgepresst. Die Feder 3 des Ventiles 5 in der zeitweise nicht druckbeaufschlagten Kupplungshälfte, der Kupplungsmuffe, ist hierbei stärker ausgebildet als die Feder 4 in der gegenüberliegenden Kupplungshälfte. Beim Kuppeln der drucklosen Kupplungshälften stoßen die Ventilköpfe 7, 8 aufeinander und verschieben sich während des Kuppelvorganges jeweils um den Ventilhub $s_1$. Hierdurch ergibt sich die Offenstellung nach Fig. 2, wobei das Ventil 6 des Kupplungssteckers durch die kräftige Feder 3 des Ventils 5 der Kupplungsmuffe gegen einen, durch die Ventilführung 15 gebildeten Anschlag 9 gedrückt wird. Steht der Kupplungsstecker jedoch unter Druck, so läßt sich das Ventil 6 nicht axial verschieben, womit das Ventil 5 um den Weg $s_1+s_2$ in die Kupplungsmuffe hineinverschoben wird. Erst bei Druckausgleich kann sich dann die stärkere Feder 3 des Ventiles 5 auswirken und auch das Ventil 6 in die in Fig. 2 gezeigte Offenstellung gegen den Anschlag 9 der Ventilführung 15 verschieben. Konstruktiv ist die Verbindungskupplung so aufgebaut, daß der freie Durchtrittsquerschnitt im Raum 18 um die Ventilführung 14 der Kupplungsmuffe größer ist als derjenige des Raumes 17 um die Ventilführung 15 des Kupplungssteckers und daß dieser wiederum größer ist als der Ventil-Durchgangsquerschnitt 13. Entsprechend verhalten sich auch die Volumina der Räume 18, 17 sowie des Raumes um die Ventile 5, 6. Die Ventile 5, 6 sind zusammen mit ihren Ventilsitzen 10, 11 so ausgelegt, daß der Ventil-Durchgangsquerschnitt 13 über die gesamte Wegstrecke 19, trotz des ansteigenden Durchmessers der Ventile 5, 6 gleich bleibt. Das Ventil 5 ist an der dem Raum 18 um die Ventilführung 14 in der Kupplungsmuffe zugewandten Seite 12 scharfkantig abgesetzt, um einen sprunghaften Übergang von dem Ventil-Durchgangsquerschnitt 13 zu dem Raum 18 um die Ventilführung 14 der Kupplungsmuffe zu erreichen.

Bei einer Strömung des hydraulischen Mediums in Richtung des Pfeiles 16 wird das Ventil 6 sowohl durch den Druck der Feder 3 wie auch durch den Druck des strömenden Mediums gegen den Anschlag der Ventilführung 15 gedrückt, womit beide Ventile 5, 6 sicher in der in Fig. 2 gezeigten offenen Lage verbleiben. Jedoch auch bei einer Richtungsumkehr der Strömung in Richtung des Pfeiles 20, wird diese Lage beibehalten, da sich dann, durch die Querschnittsvergrößerung im Raum 18, ein hydraulischer Druck aufbaut der wiederum bestrebt ist die Ventile 5, 6 in Richtung auf den Anschlag 9 zu verschieben. Da der Ventil-Durchgangsquerschnitt 13 durch die besondere Form der Ventile 5, 6 und deren Ventilsitze 10, 11 über die gesamte Wegstrecke 19 gleich bleibt, finden hier keine Druckänderungen statt beziehungsweise wirken keine die Ventile 5, 6 möglicherweise axial verschiebenden Kräfte auf diese Ventile 5, 6 ein.

## Patentansprüche

1. Unter Druck kuppelbare Verbindungskupplung für Hydraulikleitungen mit dem Gehäuse (1) einer zeitreise nicht druckbelasteten und dem Gehäuse (2) einer im Betrieb ständig unter Druck stehenden Kupplungshälfte, wobei zentrisch in jedem Gehäuse eine Ventilführung (14 bzw. 15) angebracht ist, in der je ein federbelastetes, hydraulisch beaufschlagbares Ventil (5 bzw. 6) axial verschiebbar angeordnet ist derart, daß die Ventilköpfe (7 bzw. 8) beim Kupplungsvorgang aufeinandergedrückt werden und hierbei das nicht druckbeaufschlagte Ventil (5) um den doppelten möglichen Ventilhub (s1) des druckbeaufschlagten Ventils (6) verschoben wird, und daß das nicht druckbeaufschlagte Ventil (5) mit einer gegenüber dem druckbeaufschlagten Ventil (6) stärkeren Feder (3) belastet ist, so daß beim Druckausgleich das ständig durchbeaufschlagte Ventil in die Offenstellung gegen einen in der ständig druckbeaufschlagten Kupplungshälfte vorgesehenen Anschlag (9) gedrückt wird, wobei sich ein maximaler Ventil-Durchgangsquerschnitt bei beiden Ventilen ergibt, dadurch gekennzeichnet, daß der Durchmesser dur Ausdrehung des Innenraumes (18) des Gehäuses (1) der zeitweise nicht druckbeaufschlagten Kupplungshälfte und damit der freie Durchgangsquerschnitt um die Ventilführung (14) bzw. den Ventilschaft deutlich größer ist als derjenige (17) in der ständig druckbeaufschlagten Kupplungshälfte.

2. Verbindungskupplung nach Anspruch 1, dadurch gekennzeichnet, daß der Durchmesser der Ausdrehung des Innenraumes (18) des Gehäuses (1) der zeitweise nicht druckbelasteten Kupplungshälfte bis zu seinem in Arbeitslage befindlichen Ventilkopf (7) gleichbleibt und dort sprunghaft übergeht in den deutlich kleineren Aussendurchmesser des Ventil-Durchgangsquerschnitts (13).

3. Verbindungskupplung nach Anspruch 1 oder 2, dadurch gekennziechnet, daß der Ventil-Durchgangsquerschnitt (13) über beide Ventilköpfe (7, 8) hinweg gleichbleibend ist.

## Revendications

1. Raccord accouplable sous pression pour tuyaux hydrauliques, comportant le carter (1) d'une moitié de raccord temporairement non soumise à la pression et le carter (2) d'une moitié de raccord constamment soumise à la pression en service, un guide de valve (14, 15) étant disposé de façon centrée dans chaque carter, une valve (5, 6) sollicitée par ressort et qui peut subir une action hydraulique étant disposée de manière à pouvoir coulisser dans chacun de ces guides de telle sorte que lors du processus d'accouplement, les têtes de valve (7, 8) sont poussées l'une sur l'autre et la soupape non soumise à la pression (5) est alors déplacée du double de la course possible (s1) de la valve soumise à la pression (6) et que la valve non soumise à la pression (5) est sollicitée par un ressort (3) plus fort que la valve soumise à la pression (6) de sorte que lors de la compensation de pression, la valve constamment soumise à la pression est poussée à la position ouverte contre une butée (9) prévue dans la moitié de raccord constamment soumise à la pression, une section maximale de passage étant alors obtenue aux deux valves, caractérisé en ce que le diamètre de l'alésage de la cavité intérieure (18) du carter (1) de la moitié de raccord temporairement non soumise à la pression et donc la section libre de passage autour de guide de valve (14) ou de la tige de valve est nettement plus grande que celle (17) de la moitié de raccord constamment soumise à la pression.

2. Raccord selon la revendication 1, caractérisé en ce que le diamètre de l'alésage de la cavité intérieure (18) du carter (1) de la moitié de raccord temporairement non soumise à la pression reste le même jusqu'à sa tête de valve (7) qui se trouve en position de travail et en cet endroit, passe brusquement au diamètre extérieur nettement plus petit de la section de passage de valve (13).

3. Raccord selon l'une des revendications 1 et 2, caractérisé en ce que la section de passage de valve (13) est constante sur les deux têtes de valve (7, 8).

## Claims

1. A connecting coupler which can be connected under pressure for hydraulic leads with the housing (1) of a coupling half which intermittently is not pressure-loaded and the housing (2) of a coupling half which during operation is constantly under pressure, and a valve guide (14 and 15) is attached centrically in each housing, in which valve guide (14 and 15) in each case a spring-loaded valve (5 and 6), which can be acted upon hydraulically, is axially displaceably arranged such that the valve heads (7 and 8) are pressed onto one another during the coupling procedure and in this connection the valve (5) which is not acted upon by pressure is displaced by double the possible valve stroke (s1) of the valve (6) which is acted upon by pressure; and in that the valve (5) which is not acted upon by pressure is loaded with a spring (3) which is stronger with respect to the valve (6) which is acted upon by pressure so that during the equalization of pressure the valve which is constantly acted upon by pressure is pressed into the open position against a stop (9) provided in the coupling half which is constantly acted upon by pressure, and a maximum valve passage cross-section results in both valves, characterized in that the diameter of the recess of the inner space (18) of the housing (1) of the coupling half which intermittently is not acted upon by pressure, and thus the free cross sectional area of passage is clearly greater about the valve guide (14) or the valve shaft than the diameter (17) in the coupling half which is constantly acted upon by pressure.

2. A connecting coupler according to claim 1, characterized in that the diameter of the recess of the inner space (18) of the housing (1) of the coupling half which intermittently is not acted upon by pressure remains equal up to its valve head (7) in the operating position and there passes over irregularly into the clearly smaller outer diameter of the valve cross sectional area of passage (13).

3. A connecting coupler according to claim 1 or 2, characterized in that the valve cross sectional area of passage (13) remains equal over both valves heads (7, 8).

**Fig 1**

**Fig 2**